# EUROPEAN PATENT SPECIFICATION

(11) **EP 1 700 757 B1**
(45) Date of publication and mention of the grant of the patent: **23.05.2012**
(21) Application number: 06004235.5
(22) Date of filing: 02.03.2006
(51) Int. Cl.: B60R 21/233

(54) **Airbag and airbag apparatus**
Gassack und Airbagvorrichtung
Sac de sécurité gonflable et dispositif de sac de sécurité gonflable

(30) Priority: 07.03.2005 JP 2005062550; 25.01.2006 JP 2006016700
(43) Date of publication of application: 13.09.2006
(73) Proprietor: TAKATA CORPORATION, Minato-ku, Tokyo 106-8510 (JP)
(72) Inventor: Abe, Kazuhiro c/o Takata Corporation, Minato-ku, Tokyo 106-8510 (JP)
(74) Representative: Banzer, Hans-Jörg

(56) References cited:
- EP-A- 0 812 741
- EP-A- 1 088 708
- WO-A-00/03898
- WO-A-00/35721
- DE-A1- 19 914 214
- GB-A- 2 323 569
- US-A- 3 883 154
- US-A- 6 086 092
- US-B1- 6 607 796

## Description

The present invention relates to an airbag for protecting an occupant of a vehicle by being inflated toward the occupant of the vehicle, and an airbag apparatus having the airbag, which is particularly suitable for a driver's seat of the vehicle.

A driver side airbag apparatus of a vehicle includes an airbag, a retainer for retaining the airbag in a steering wheel, an inflator (a gas generator) for inflating the airbag, and a module cover mounted on the retainer for covering a folded airbag. In a vehicle crash, the airbag protects a driver by pushing the module cover open while being inflated toward the front side of the steering wheel (i.e., toward the driver).

U.S. Patent No. 6,086,092 discloses an airbag wherein an inner bag is located between a central portion of an occupant facing surface of an outer bag constituting an outer covering of the airbag and an opening for an inflator, which is located in a central portion of a rear surface opposite to the central portion of the occupant facing surface, so that the inside of the airbag is partitioned into a chamber in the occupant facing central portion and a chamber in an occupant facing outer periphery surrounding the chamber in the occupant facing central portion. Communication holes communicating between these chambers are formed in the inner bag.

In this patent, the inner bag is made by sewing of outer peripheries of a front panel at an occupant side and a rear panel opposite to the front panel. A portion, which is a central portion of the front panel and becomes an end of the occupant side when the inner bag is inflated, is stitched with the occupant facing central portion. In addition, an inflator opening is formed in a portion, which is a central portion of the rear panel and becomes an end of the rear side when the inner bag is inflated, and a periphery of the inflator opening is mounted in a mount plate together with a periphery of an inflator opening of the outer bag.

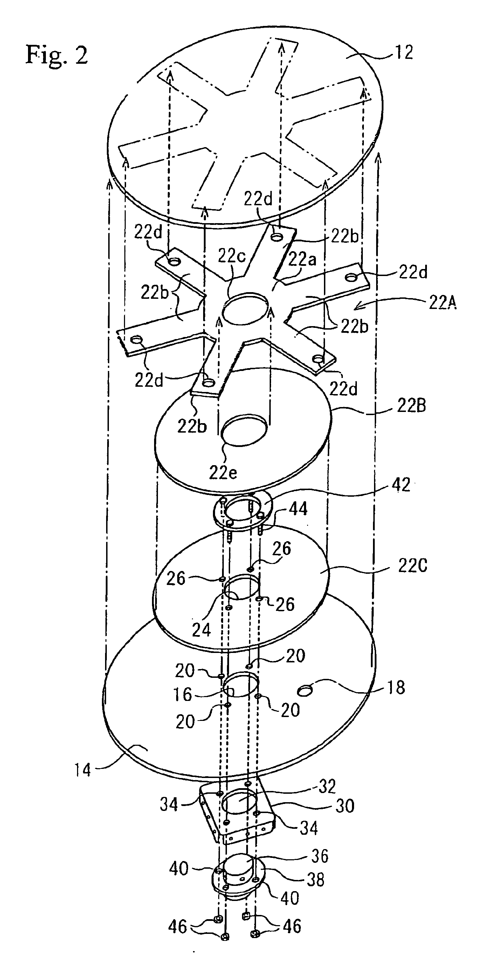

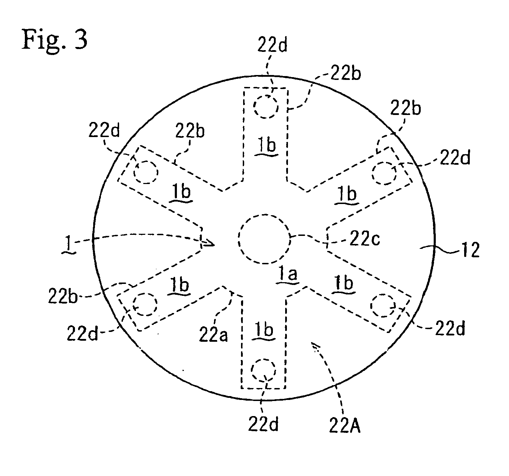

In the same patent, gas from the inflator is introduced into the inner bag (the chamber in the occupant facing central portion) through the inflator openings for the gas, and subsequently is introduced into the outer bag (the chamber in the occupant facing outer periphery) through the communication holes. Accordingly, in the airbag of the same patent, the occupant facing central portion is inflated first, and subsequently, the occupant facing outer periphery is inflated, as shown in Figs. 2 and 3 of the same patent.

Therefore, in the airbag of the above patent, if an occupant moves forward quickly upon the airbag in a relatively early stage of the airbag deployment after the airbag starts to be inflated, there may be a problem that the occupant facing outer periphery can not reliably receive the occupant.

GB 2 323 569 A, which serves as basis for the preamble of the independent claim, discloses an airbag having three super-imposed fabric layers, apertures being formed in the intermediate layer and seams connecting the intermediate and lower layers adjacent the apertures. The airbag is inflated outwardly before being inflated towards the occupant.

US 3 883 154 A discloses an inflatable bag in which gas flows radially outwardly through radial feeder passageways incorporated within end walls of the airbag.

EP 1 088 708 A2 describes an airbag device in which a bag structure is formed by first and second fabrics, and a third fabric is installed in the bag structure in a manner to cover the gas ejection portion of an inflator. A plurality of gas passageways are provided between the first and third fabrics.

DE 199 14 214 A1 describes a safety device in which an airbag has a first chamber system and a second chamber system. The first chamber system is disposed within the second chamber system. The inner first chamber system is inflated first upon actuation of a gas generator.

Accordingly, it is an object of the present invention to provide an airbag which is capable of receiving occupants over a wide range of an occupant facing surface even during an initial inflation phase, and to provide an airbag apparatus having the airbag.

According to the present invention, this object is achieved by an airbag according to claim 1 and an airbag apparatus according to claim 7. The dependent claims define preferred or advantageous embodiments.

According to an aspect of the invention, an airbag is provided which has an occupant facing surface and a rear surface opposite to the occupant facing surface, the airbag being inflatable by gas from an inflator. A radial chamber is formed along the inner side of the occupant facing surface and extends in an airbag radial direction. When the airbag is inflated, at least some of the gas from the inflator is introduced into the radial chamber. The radial chamber includes a central cell and a plurality of radial cells extending from the central cell in an airbag radial direction.

In an airbag according to the above aspect, as the gas from the inflator is introduced into a central portion of the radial chamber, and the gas is discharged from the leading end of the radial portion of the radial chamber into the airbag, the airbag may be inflated.

An airbag apparatus according to the invention has an airbag and an inflator for supplying gas to the airbag, in which the airbag is an airbag according to any one aspect or embodiment of the invention.

In the invention, a radial chamber extending in an airbag radial direction (a direction substantially perpendicular to a line connecting an occupant to an airbag and a direction away from the line while the occupant faces the airbag) is formed, along the occupant facing surface of the airbag, or along the rear surface opposite to the occupant facing surface, or between the occupant facing surface and the rear surface. When the airbag is inflated, at least some of the gas from the inflator is introduced into the radial chamber and the radial chamber is inflated in the airbag radial direction. In addition, since a volume of the radial chamber is smaller than the volume of the entire airbag, the radial chamber reaches quickly high pressure, and accordingly, is quickly expanded in the airbag radial direction.

Accordingly, in the airbag and the airbag apparatus of the present invention, when the inflator is actuated to exhaust gases, the radial chamber is inflated in the airbag radial direction in an early stage of airbag deployment, and accordingly, the occupant facing surface is expanded over a wide range, and the occupant facing surface is supported by the inflated radial chamber from the inner side of the airbag over a wide range.

Accordingly, even if the occupant moves forward quickly upon the airbag in an early phase after the airbag starts to be inflated, the airbag can reliably receive the occupant over a wide range of the occupant facing surface.

In an embodiment, the gas from the inflator is introduced into the central portion of the radial chamber, and the gas is discharged from the leading end of the radial portion of the radial chamber into the airbag, thereby inflating the entire airbag. Accordingly, when the airbag is inflated, the radial chamber is inflated and expanded in the airbag radial direction in a very early stage of the airbag deployment. In addition, when the inflated radial chamber receives the occupant, it can sufficiently absorb an impact of the occupant since the gas in the radial chamber is discharged from the leading end of the radial portion of the radial chamber into the airbag.

Hereinafter, exemplary embodiments of the invention will be described with reference to the accompanying drawings.

Fig. 1 is a cross-sectional view of an airbag and an airbag apparatus according to a first embodiment.

Fig. 2 is an exploded perspective view of the airbag and the airbag apparatus of Fig. 1.

Fig. 3 is a plan view of the airbag of Fig. 1.

Figs. 4(a) and 4(b) are cross-sectional views explaining operation of the airbag of Fig. 1, wherein Fig. 4(a) shows a state at the moment when or immediately after the airbag protects an occupant before the airbag is inflated to the fullest, and Fig. 4(b) shows a state a little time later than the state of Fig. 4(a).

Fig. 5 is a cross-sectional view of an airbag and an airbag apparatus according to a second embodiment.

Fig. 6 is an exploded perspective view of the airbag and the airbag apparatus of Fig. 5.

Fig. 7 is a cross-sectional view of an airbag and an airbag apparatus.

Fig. 8 is an exploded perspective view of the airbag and the airbag apparatus of Fig. 7.

Fig. 9 is a cross-sectional view of an airbag and an airbag apparatus.

Fig. 10 is an exploded perspective view of the airbag and the airbag apparatus of Fig. 9.

Fig. 11 is a plan view of an airbag according to a third embodiment.

Fig. 12 is a cross-sectional view of an airbag and an airbag apparatus according to a fourth embodiment.

Fig. 13 is an exploded perspective view of the airbag and the airbag apparatus of Fig. 12.

Fig. 14 is a plan view of an airbag according to a fifth embodiment.

Fig. 15 is a plan view of an airbag according to an sixth embodiment.

Fig. 16 is a cross-sectional view of an airbag and an airbag apparatus.

Fig. 17 is an exploded perspective view of the airbag and the airbag apparatus of Fig. 16.

Fig. 18 is a cross-sectional view of an airbag and an airbag apparatus.

Fig. 19 is a cross-sectional view of an airbag and an airbag apparatus.

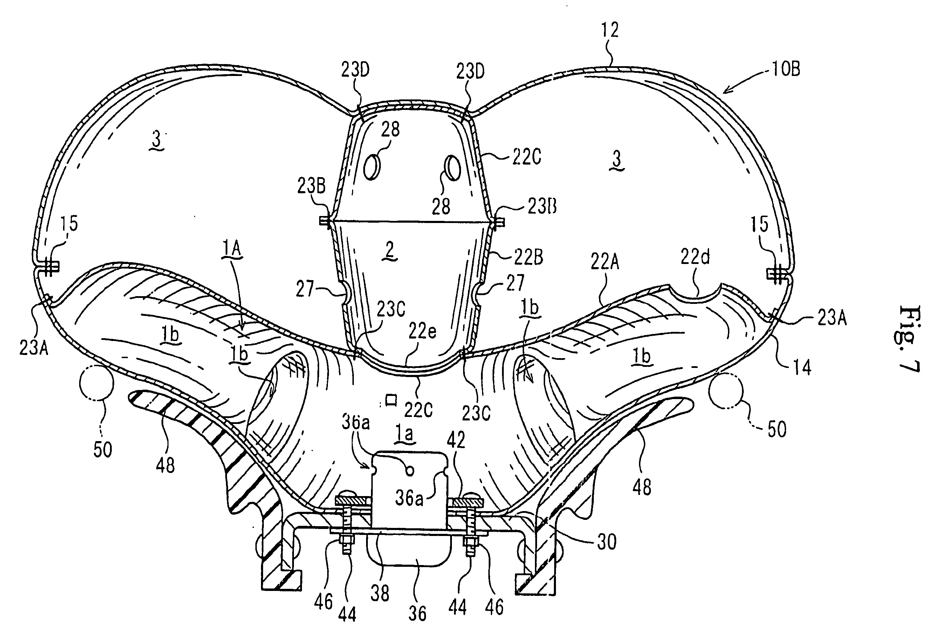

The airbags and airbag apparatuses of Figs. 7-10 and Figs. 16-19 are, by themselves, no embodiments of the claims.

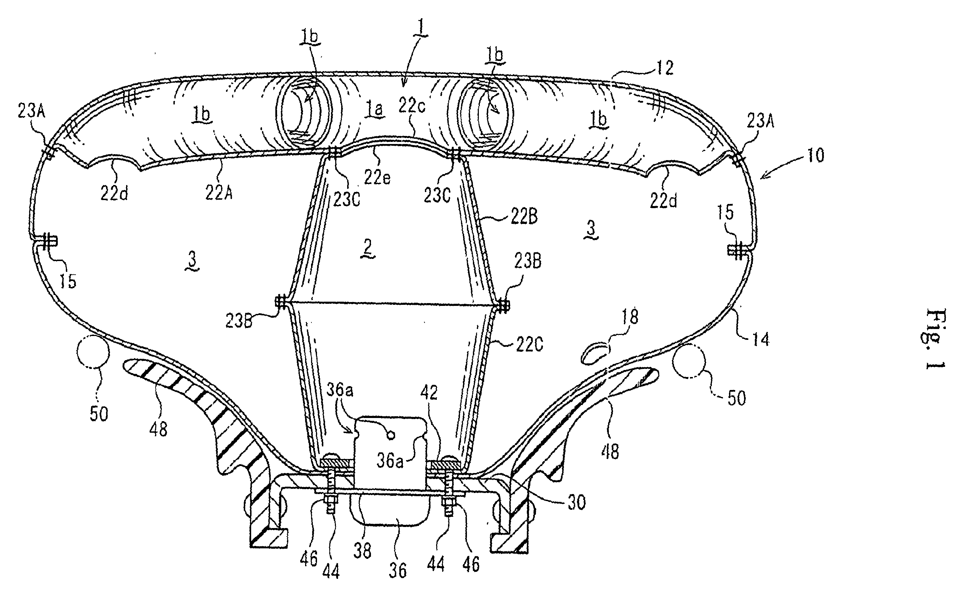

A first embodiment will be explained with reference to Figs. 1-4. In this embodiment, an airbag 10 is a driver airbag of a vehicle.

The airbag 10 includes a front panel 12 constituting an occupant facing surface, a rear panel 14 constituting an outer surface (rear surface) opposite to the occupant facing surface, first, second and third inner panels 22A, 22B and 22C for partitioning the inside of the airbag 10, etc.

The front panel 12, the rear panel 14, the second inner panel 22B and the third inner panel 22C are made of circular woven fabrics.

The front panel 12 and the rear panel 14 have nearly the same diameter and are formed in a pouch-like shape by seaming between peripheries thereof by means of a seam 15. The seam 15 is formed into an annular shape along the peripheries of the front panel 12 and the rear panel 14. The seam 15 may, e.g., be made of stitching fibers or the like, but not limited thereto.

An inflator opening 16 and a vent hole 18 are formed in the rear panel 14. The inflator opening 16 is disposed at the center of the rear panel 14. Bolt insertion holes 20 are formed around the inflator opening 16.

The first inner panel 22A is disposed along the inner side of the front panel 12 (the inner side of the airbag). In this embodiment, the first inner panel 22A includes a central portion 22a having a diameter smaller than that of the front panel 12, a plurality of tongue-like radial portions 22b (six in this embodiment) extending from the outer periphery of the central portion 22a in a radial direction, a first communication hole 22c formed in the center of the central portion 22a, and second communication holes 22d formed in leading ends of the radial portions 22b. The radial portions 22b are arranged at predetermined intervals in the circumferential direction of the central portion 22a. The first inner panel 22A is also made of woven fabrics of the same material as the other panels.

The first inner panel 22A overlaps with the inner side of the front panel 12 such that the central portion 22a is concentric with the front panel 12, and is stitched with the front panel 12 by means of a seam 23A (shown in Fig. 1, but not shown in Fig. 3) in a continuous manner, with the peripheries of the central portion 22a and the radial portions 22b connected along an outline of the first inner panel 22A. A radial chamber 1 is formed between the first inner panel 22A and the front panel 12.

The radial chamber 1 includes a central cell 1a disposed in the center of the front panel 12 and a plurality of radial cells 1b (six in this embodiment) extending from the central cell 1a in an airbag radial direction along the inner side of the front panel 12, as shown in Fig. 3. The central cell 1a is placed between the central portion 22a of the first inner panel 22A and the front panel 12, and the radial cells 1b are placed between the radial portions 22b and the front panel 12. The central cell 1a is communicated with the radial cells 1b.

The first inner panel 22A (the radial chamber 1) is not limited to the above-described constitution. For example, the number of the radial portions 22b (the radial cells 1b) may be more or less than six. Also, the second communication holes 22d may be formed in all of the radial portions 22b (the radial cells 1b), or there may exist radial portions 22b (the radial cells 1b) in which no second communication holes 22d are formed.

In this embodiment, the length from the central portion 22a (the central cell 1a) to each of the leading ends of the radial portions 22b (the radial cells 1b) is slightly smaller than a radius of the front panel 12. However, this length may be increased such that the radial portions 22b (the radial cells 1b) extend to the rear panel 14.

The second and third inner panels 22B and 22C are formed between the first panel 22A and the rear panel 14.

The second and third inner panels 22B and 22C are concentrically arranged with the front panel 12 and the rear panel 14, and their peripheries are sewn therebetween by means of the seam 23B. A communication hole 22e having about the same diameter as the first communication hole 22c is formed in the center of the second inner panel 22B, and peripheries of these communication holes 22e and 22c are sewn therebetween by means of the seam 23C.

An inflator opening 24 having about the same diameter as the inflator opening 16 of the rear panel 14 and concentrically arranged with the inflator opening 16 is formed in the center of the third inner panel 22C. In addition, bolt insertion holes 26 overlapping with the bolt insertion holes 20 are formed around the inflator opening 24.

The periphery of the inflator opening 24 of the third inner panel 22C overlaps with the periphery of the inflator opening 16 of the rear panel 14 and the periphery of an inflator mount hole 32 of the retainer 30. In addition, the peripheries of the inflator openings 24 and 16 are fixed to the retainer 30 through the bolt insertion holes 26 and 20.

Accordingly, the periphery of the inflator opening 24 of the third inner panel 22C is connected to the periphery of the inflator opening 16 of the rear panel 14, the peripheries of the second and third inner panels 22B and 22C are connected to each other, the peripheries of the communication holes 22e and 22c of the second inner panel 22B and the first inner panel 22A, respectively, are connected to each other, and the outer periphery of the first inner panel 22A is connected to the front panel 12.

The inside of the airbag 10 is partitioned into a central chamber 2 in the center of the airbag 10 and a circumferential chamber 3 surrounding the central chamber 2 between the first inner panel 22A and the rear panel 14 by the second and third inner panels 22B and 22C. The inner sides of the inner panels 22B and 22C serve as the central chamber 2.

The central chamber 2 is communicated with the radial chamber 1 through the first communication holes 22e and 22c, and the radial chamber 1 is communicated with the circumferential chamber 3 through the second communication holes 22d.

In this embodiment, a relationship of (volume of the radial chamber 1) < (volume of the central chamber 2) < (volume of the circumferential chamber 3) is established.

The inflator mount hole 32 is formed in the center of the retainer 30 for mounting the airbag 10, and bolt insertion holes 34 are formed around the center of the retainer 30.

An inflator 36 has a roughly cylindrical shape, and gas outlets 36a are formed on a side of a circumferential surface at a leading end of the inflator 36 in a cylinder axis direction. In this embodiment, four gas outlets 36a are formed at predetermined intervals in a circumferential direction of the inflator 36. The inflator 36 is constituted to exhaust gas from these gas outlets 36a in a radial direction. An inflator fixation flange 38 is projected from the side of the circumferential surface in the middle portion of the inflator 36 (a side behind the gas outlets 36a) in the cylinder axis direction of the inflator 36. Bolt insertion holes 40 are formed in the flange 38. A leading end of the inflator 36 is inserted into the inflator mount hole 32.

In mounting the airbag 10 in the retainer 30, the peripheries of the inflator openings 16 and 24 of the rear panel 14 and the third inner panel 22C are fixed to the periphery of the inflator mount hole 32 by means of a fixation ring 42. The leading end of the inflator 36, which is inserted into the inflator mount hole 32, is received in the central chamber 2 through the inflator openings 16 and 24.

At this time, by inserting stud bolts 44 of the fixation ring 42 into the bolt insertion holes 26, 20, 34 and 40 and fastening the stud bolts 44 with nuts 46 at leading ends of the stud bolts 44, the third inner panel 22C, the airbag 10 and the inflator 36 are fixed to the retainer 30. The airbag apparatus is completed by folding the airbag 10 and mounting a module cover 48 on the retainer 30 to cover the folded airbag 10. The completed airbag apparatus is installed in a steering wheel 50 of a vehicle.

In a vehicle crash, the inflator 36 exhausts gases, and then the airbag 10 is inflated by the gas from the inflator 36. The airbag 10 pushes the module cover 48 open and is inflated toward the front side of the steering wheel 50 (i.e., the occupant side) to protect a driver.

In this case, the gas from the inflator 36 is exhausted into the central chamber 2, first inflating the central chamber 2. Then, the gas is introduced from the central chamber 2 into the central cell 1a of the radial chamber 1 through the first communication holes 22e and 22c, and subsequently, as the gas is introduced from the central cell 1a into the radial cells 1b, the radial chamber 1 is inflated in the airbag radial direction along the inner side of the front panel 1. Thereafter, the gas is discharged from the leading ends of the radial cells 1b into the circumferential chamber 3 through the second communication hole 22d, thus inflating the circumferential chamber 3.

Since the volume of the central chamber 2 and the volume of the radial chamber 1 are smaller than the total volume of the airbag 10, the gas is quickly introduced from the central chamber 2 to the radial chamber 1. Accordingly, after the airbag starts to be inflated, the radial chamber 1 quickly reaches high pressure and is expanded quickly in the airbag radial direction. Accordingly, the front panel 12, which faces the occupant, is quickly expanded over a wide range, and almost the entire the airbag is supported by the inflated radial chamber 1.

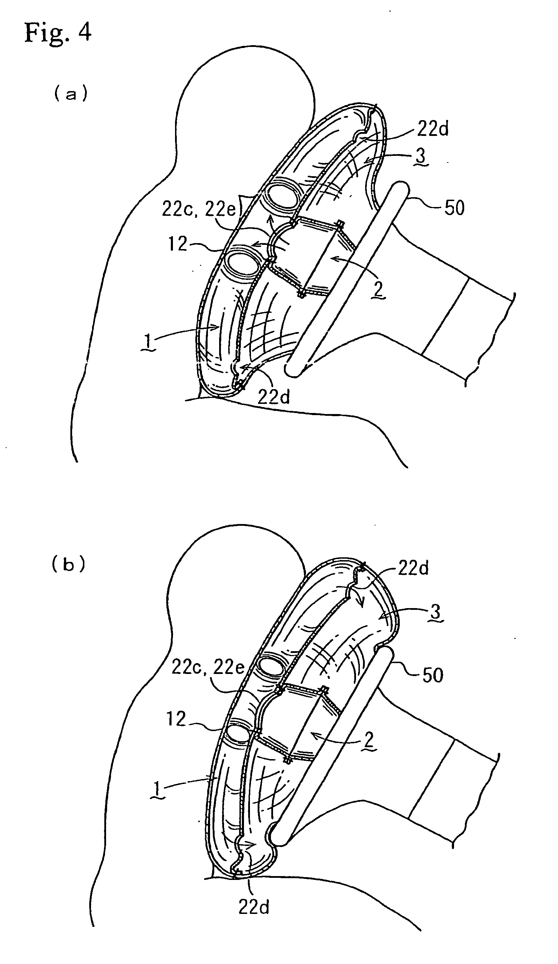

Accordingly, as shown in Fig. 4(a), even when the occupant moves forward quickly upon the airbag 10 in an early phase of the airbag deployment when the circumferential chamber 3 is not inflated to the fullest after the airbag starts to be inflated, the airbag can reliably receive the occupant over a wide range of the front panel 12. In addition, as shown in Fig. 4(b), as the gas is discharged from the radial chamber 1 into the circumferential chamber 3 through the second communication hole 22d, such that the impact of the occupant can be absorbed.

In this embodiment, since the front panel 12 is connected to the rear panel 14 through the first to third inner panels 22A, 22B and 22C, the front panel 12 can be prevented from protruding excessively toward the occupant when the airbag 10 is inflated.

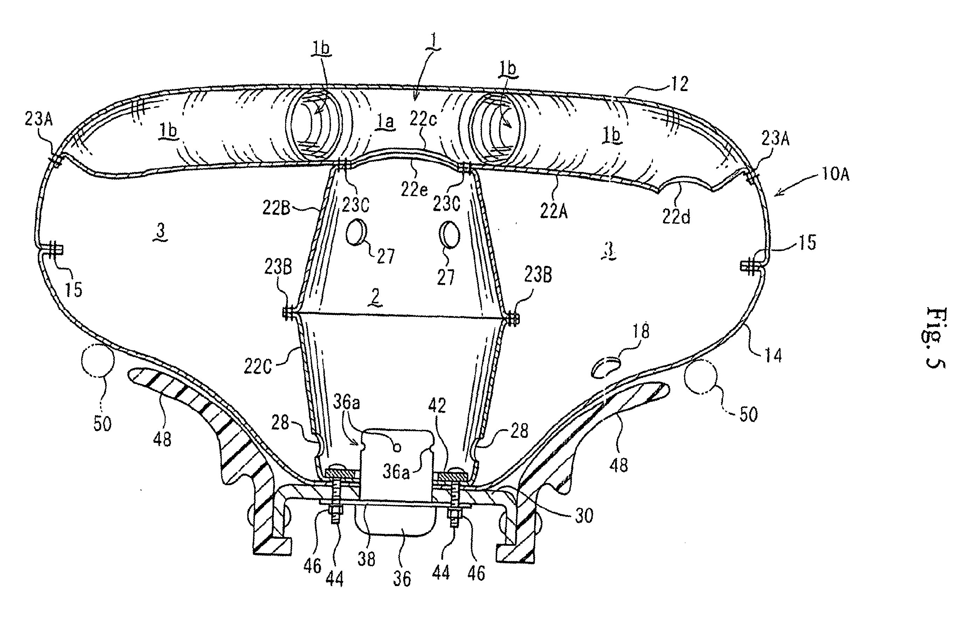

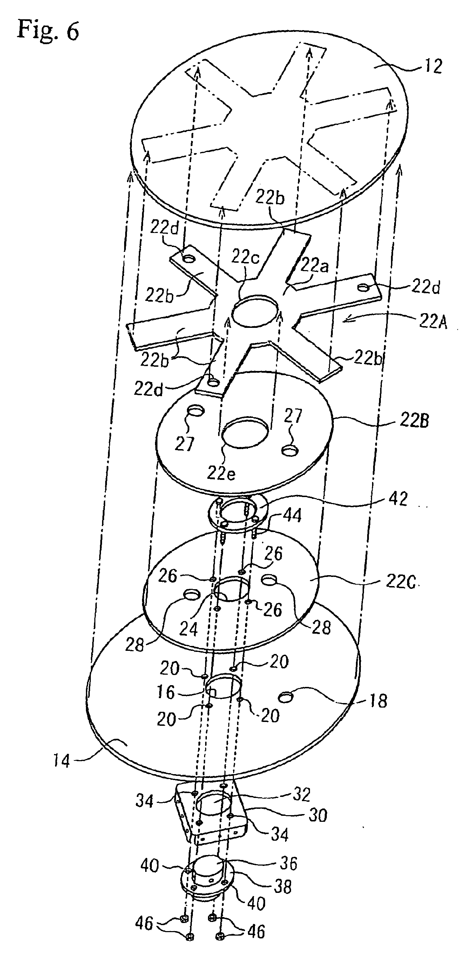

Fig. 5 is a cross-sectional view of an airbag and an airbag apparatus according to a second embodiment, and Fig. 6 is an exploded perspective view of the airbag and the airbag apparatus.

An airbag 10A in this embodiment includes communication holes 27 and 28 for communicating the second and third inner panels 22B and 22C to the central chamber 2 and the circumferential chamber 3, respectively, in the airbag 10 shown in Figs. 1 to 4.

In this embodiment, the communication holes 28 are formed in the direction of where a gas is exhausted from the inflator 36 disposed in the central chamber 2 through the inflator openings 16 and 24, that is, in positions facing the gas outlets 36a of the inflator 36.

In this embodiment, two communication holes 27 and two communication holes 28 are formed at predetermined intervals in the circumferential direction of the airbag. In addition, the communication holes 27 and 28 are out of alignment in the circumferential direction with respect to the center of the airbag 10A.

However, the number or arrangement of these communication holes 27 and 28 is not limited to the above mentioned number or arrangement. For example, all or some of communication holes 28 may face the gas outlets 36a of the inflator 36. Alternatively, there may be some communication holes 28 that do not face the gas outlets 36a.

In this embodiment, the number of the second communication holes 22d for communicating the radial chamber 1 to the circumferential chamber 3 is smaller than that of the airbag 10 shown in Fig. 1 to Fig. 4. Specifically, in this embodiment, in the first inner panel 22A, the radial portions 22b having the second communication holes 22d and the radial portions 22b having no second communication holes 22d are alternately arranged in the circumferential direction of the central portion 22a.

Other constitution of the airbag 10A is the same as that of the airbag 10 shown in Figs. 1 to 4. In Figs. 5 and 6, the same reference numerals as Figs. 1 to 4 denote the same parts.

In the airbag 10A, when the inflator 36 is actuated in the similar way to the airbag 10 shown in Figs. 1 to 4, gas from the inflator 36 is quickly introduced from the central chamber 2 into the radial chamber 1 through the first communication holes 22c and 22e, and the radial chamber 1 is inflated and expanded in the airbag radial direction in the early stage of the airbag deployment, supporting the front panel 12, which faces the occupant, over a wide range of the front panel 12.

In addition, in this embodiment, since some of the gas is introduced from the central chamber 2 into the circumferential chamber 3 through the communication holes 27 and 28 of the second and third inner panels 22B and 22C without going through the radial chamber 1, the circumferential chamber 3 is also inflated beforehand.

Particularly, in this embodiment, since the communication hole 28 is disposed in the direction of where the gas is exhausted from the inflator 36, the gas from the inflator 36 is exhausted toward the neighborhood of the communication hole 28 in a straight form and is introduced from the communication hole 28 into the circumferential chamber 3. Accordingly, the gas exhausted from the inflator 36 is directly introduced into the circumferential chamber 3, and accordingly, the circumferential chamber 3 is also inflated very early during the airbag deployment. As a result, the whole the airbag 10A is inflated very quickly.

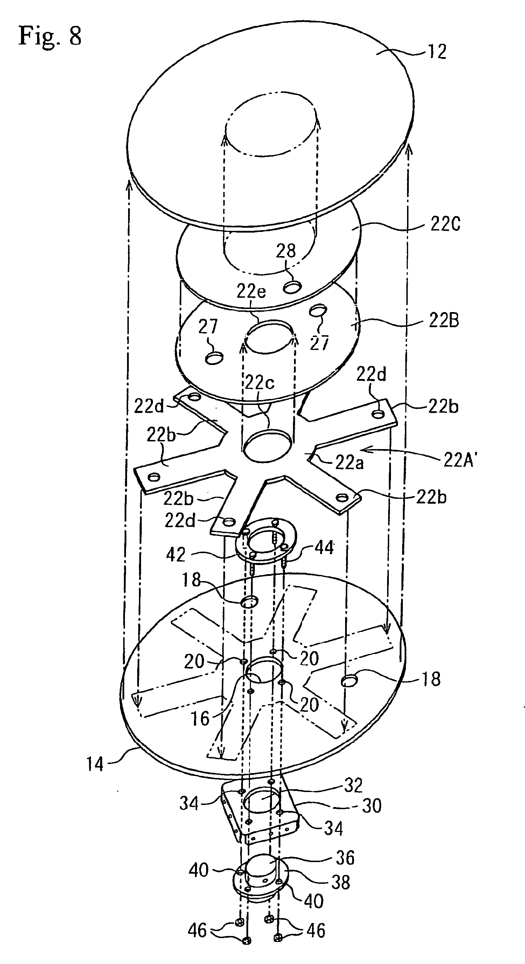

Fig. 7 is a cross-sectional view of an airbag and an airbag apparatus, and Fig. 8 is an exploded perspective view of the airbag and the airbag apparatus.

In this structure, an airbag 10B includes a radial chamber 1A extending in the airbag radial direction along the inner side of the rear panel 14 (the inner side of the airbag) constituting an outer surface (rear surface) opposite to the occupant facing surface.

The airbag 10B also includes the front panel 12 constituting the occupant facing surface, the rear panel 14, the first to third inner panels 22A, 22B and 22C for partitioning the inside of the airbag 10B, etc. The front panel 12, the rear panel 14, the second panel 22B and the third panel 22C have a circular shape. The first inner panel 22A includes the central portion 22a having a diameter smaller than those of the front panel 12 and the rear panel 14 and the plurality of tongue-like radial portions 22b (six in this case) extending from the outer periphery of the central portion 22a in the radial direction.

However, the first inner panel 22A is disposed along the inner side of the rear panel 14, and the second and third inner panels 22B and 22C are disposed between the first inner panel 22A and the front panel 12. The second inner panel 22B is positioned at the first inner panel 22A side and the third inner panel 22C is positioned at the front panel 12 side.

The first inner panel 22A overlaps with the inner side of the rear panel 14 such that the central portion 22a is concentric with the rear panel 14, and is stitched with the rear panel 14 by means of the seam 23A in a continuous manner, with the outer peripheries of the central portion 22a and the radial portions 22b connected to each other. Accordingly, between the rear panel 14 and the first inner panel 22A are formed a central cell 1a disposed in the center of the rear panel 14 and a radial chamber 1A having a plurality of radial cells 1b (six in this case) extending from the central cell 1a in the airbag radial direction along the inner side of the rear panel 14. The first communication hole 22c is formed in the central portion 22a, and the second communication holes 22d are formed in the leading ends of the radial portions 22b, respectively, in the circumferential direction of the central portion 22a.

A vent hole 18 is formed in the rear panel 14, and is disposed in a position at which the vent hole 18 does not overlap with the first inner panel 22A of the rear panel 14.

The second and third inner panels 22B and 22C are concentrically arranged with the front panel 12 and the rear panel 14 between the first inner panel 22A and the front panel 12, and their peripheries are sewn therebetween by means of the seam 23B. A communication hole 22e having about the same diameter as the first communication hole 22c is formed in the center of the second inner panel 22B, and peripheries of these communication holes 22c and 22e are sewn therebetween by means of the seam 23C.

The inflator opening 24 and the bolt insertion holes 26 are not formed in the center of the third inner panel 22C, and a central portion of the third inner panel 22C is stitched with the central portion of the front panel 12 by means of a seam 23D.

Accordingly, in the airbag 10B, the outer periphery of the first inner panel 22A is connected to the rear panel 14, the peripheries of the communication holes 22c and 22e of the first and second inner panels 22A and 22B are connected to each other, the peripheries of the second and third inner panels 22B and 22C are connected to each other, and the central portion of the third inner panel 22C is connected to the central portion of the front panel 12.

In addition, in the airbag 10B, the inside of the airbag 10B is partitioned into the central chamber 2 and the circumferential chamber 3 surrounding the central chamber 2 between the first inner panel 22A and the front panel 12 by the second and third inner panels 22B and 22C. The central chamber 2 is the inside of the volume formed by the inner panels 22B and 22C. The central chamber 2 is communicated with the radial chamber 1A through the first communication holes 22c and 22e, and the radial chamber 1A is communicated with the circumferential chamber 3 through the second communication holes 22d.

The communication holes 27 and 28 for communicating the central chamber 2 with the circumferential chamber 3 are formed in the second and third inner panels 22B and 22C, respectively.

A relationship of (volume of the radial chamber 1A) < (volume of the central chamber 2) < (volume of the circumferential chamber 3) is established.

In the airbag 10B, the gas outlets 36a of the inflator 36 are arranged in the central cell 1a of the radial chamber 1A through the inflator opening 16 of the rear panel 14.

In the airbag 10B, the periphery of the inflator opening 24 of the rear panel 14 is fixed to the periphery of the inflator mount hole 32 of the retainer 30 by means of the fixation ring 42. Then, the airbag 10B is mounted on the retainer 30.

Other constitution of the airbag 10B is the same as the above-described embodiments.

In the airbag 10B, gas is exhausted from the inflator 36 into the radial chamber 1A. Accordingly, the radial chamber 1A is inflated and expanded in the airbag radial direction along the inner side of the rear panel 14 in a very early stage of the airbag development. Subsequently, the gas is introduced from the radial chamber 1A into the central chamber 2 through the first communication holes 22c and 22e, thus inflating the central chamber 2, and the gas is introduced from the radial chamber 1A and the central chamber 2 into the circumferential chamber 3 through the second communication holes 22d at the leading ends of the radial cells 1b and the communication holes 27 and 28 of the inner panels 22B and 22C, thus inflating the circumferential chamber 3.

In the airbag 10B, the radial chamber 1A is inflated and expanded in the airbag radial direction in an early stage of the airbag deployment after the airbag starts to be inflated, thus expanding the front panel 12, which faces the occupant, over a wide range of the front panel 12, and substantially the whole front panel 12 is supported by the inner side of the airbag 10B. Accordingly, even when the occupant moves forward quickly upon the airbag 10B in an initial phase of the inflation, the front panel 12 can reliably receive the occupant over a nearly entire area of the front panel 12.

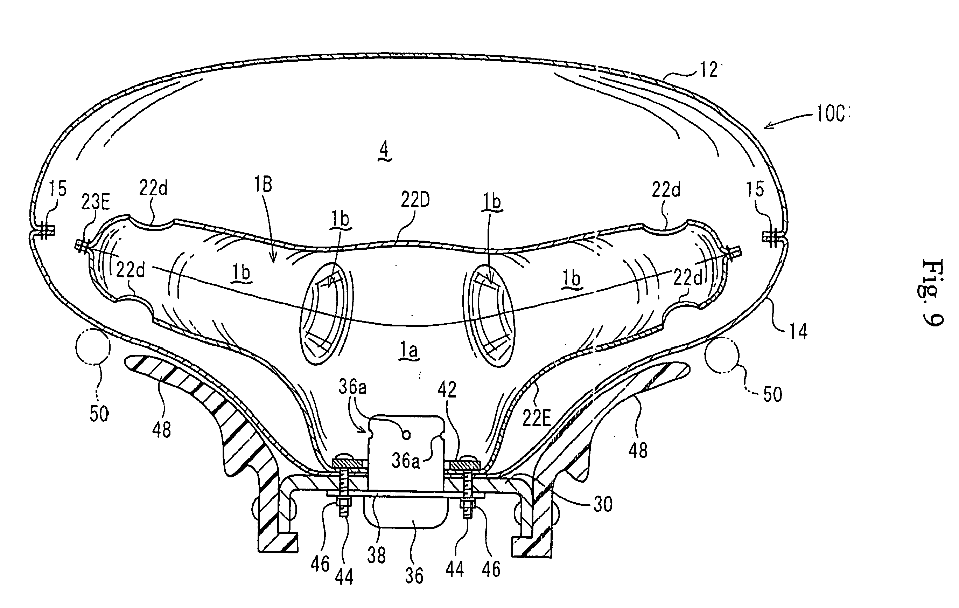

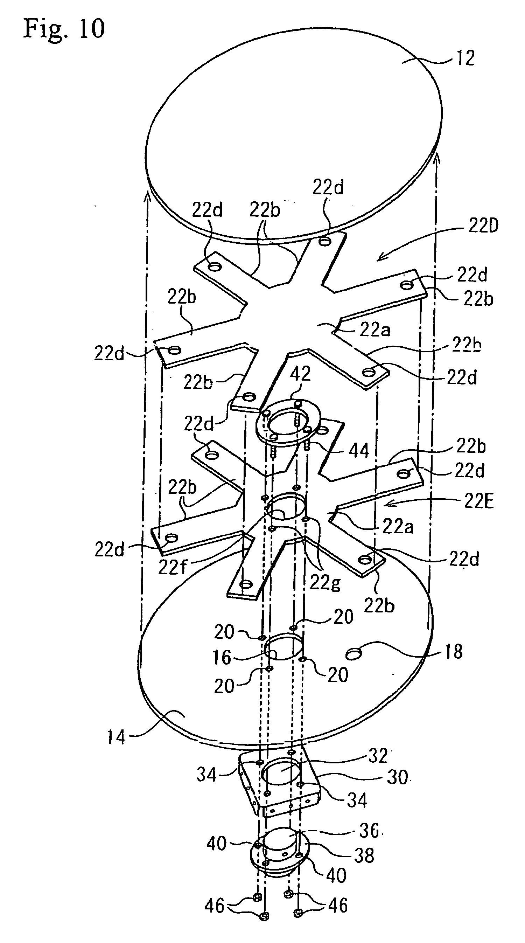

Fig. 9 is a cross-sectional view of an airbag and an airbag apparatus, and Fig. 10 is an exploded perspective view of the airbag and the airbag apparatus.

In this structure, an airbag 10C includes a radial chamber 1B extending in the airbag radial direction between the front panel 12 constituting the occupant facing surface of the airbag 10C and the rear panel 14 constituting a rear surface (that is, inside the airbag 10C).

The airbag 10C includes the front panel 12, the rear panel 14, and a first inner panel 22D and a second inner panel 22E, which are formed inside the airbag 10C. The front panel 12 and the rear panel 14 have a circular shape.

In this structure, like the inner panel 22A in the above-described embodiments, each of the first and second inner panels 22D and 22E includes the central portion 22a having a diameter smaller than those of the front panel 12 and the rear panel 14 and the plurality of tongue-like radial portions 22b (six in this case) extending from the outer periphery of the central portion 22a in the radial direction. The communication holes 22d are formed in the leading ends of the radial portions 22b. In addition, while the communication holes 22d are formed in the radial portions 22b of both of the inner panels 22D and 22E The communication holes 22d may be formed in the radial portions 22b of either one of the inner panels 22D and 22E.

These first and second inner panels 22D and 22E are arranged such that the respective central portions 22a are concentric with the front panel 12 and the rear panel 14 and the respective radial portions 22b overlap with each other between the front panel 12 and the rear panel 14. The peripheries of the first and second inner panels 22D and 22E are sewn therebetween by a seam 23E along outlines of the first and second inner panels 22D and 22E. An inflator opening 22f concentrically disposed with the inflator opening 16 in the center of the rear panel 14 is formed in the central portion 22a of the second inner panel 22E at the rear panel 14 side, and bolt insertion holes 22g are formed around the inflator opening 22f.

The periphery of the inflator opening 22f of the second inner panel 22E overlaps with the periphery of the inflator opening 16 of the rear panel 14 and the periphery of the inflator mount hole 32 of the retainer 30. In addition, the peripheries of the inflator openings 22f and 16 are fixed to the periphery of the inflator mount hole 32 through the bolt insertion holes 22g and 20.

Accordingly, the inside of the airbag 10C is partitioned into the radial chamber 1B extending in the airbag radial direction and a residual chamber 4 surrounding the radial chamber 1B between the front panel 12 and the rear panel 14. The radial chamber 1B is at the inner sides of the inner panels 22E and 22D and has the central cell 1a located in the center of the airbag 10C and the plurality (6) of radial cells 1b extending from the central cell 1a in the airbag radial direction. The radial chamber 1B and the residual chamber 4 are communicated with each other through the communication holes 22d in the leading ends of the radial cells 1b.

The gas outlets 36a of the inflator 36 are arranged in the central cell 1a of the radial chamber 1B through the inflator openings 16 and 22f.

A relationship of (volume of the radial chamber 1B) < (volume of the residual chamber 4) is established.

Other constitution of the airbag 10C is the same as in the above-described embodiments.

In the airbag 10C, gas is exhausted from the inflator 36 into the radial chamber 1B. Accordingly, the radial chamber 1B is inflated and expanded in the airbag radial direction between the front panel 12 and the rear panel 14 in a very early stage of the airbag development. Subsequently, the gas is introduced from the leading ends of the radial cells 22b of the radial chamber 1B into the residual chamber 4 through the communication holes 22d, thus inflating the residual chamber 4 (the whole the airbag 10C).

In the airbag 10C, the radial chamber 1B is inflated and expanded in the airbag radial direction in an early stage of the airbag development after the airbag starts to be inflated, thus expanding the front panel 12, which faces the occupant, over a wide range of the front panel 12, and substantially the whole front panel 12 is supported by the inner side of the airbag 10C. Accordingly, even when the occupant moves forward quickly upon the airbag 10C in an initial phase of inflation, the front panel 12 can reliably receive the occupant over almost the entire range of the front panel 12.

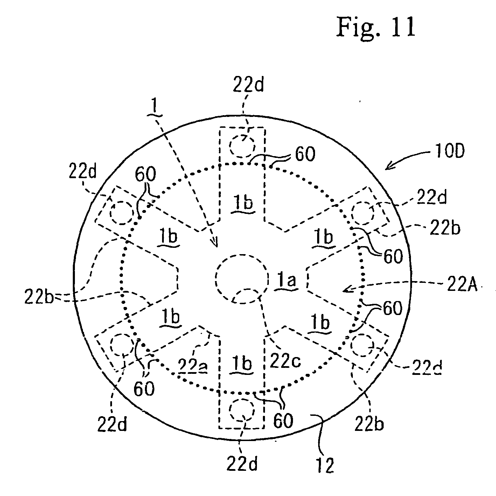

Fig. 11 is a plan view of an airbag according to a third embodiment.

This embodiment provides an airbag 10D wherein the radial portions 22b of the first inner panel 22A and the front panel 12 are sewn therebetween by a tear seam 60 at a position slightly closer to the central cell 1a than the second communication holes 22d at the leading ends of the radial cells 1b in the airbag 10 shown in Figs. 1 to 4, and gas is prevented from flowing into the second communication holes 22d until the tear seam 60 is torn. The tear seam 60 is constituted to be torn when more than the predetermined tension is applied to the tear seam 60, such that the radial chambers 22b are decoupled from the front panel 12.

Other constitution of the airbag 10D is the same as the one of the airbag 10 shown in Figs. 1 to 4.

In the airbag 10D, in an initial phase of inflation of the radial chamber 1, since the gas is not discharged from the radial cells 1b through the second communication holes 22d, the radial chamber 1 reaches high pressure very quickly, and accordingly, is quickly inflated and expanded in the airbag radial direction. When the radial cells 1b are sufficiently inflated, the tear seam 60 is torn to open the second communication holes 22d, and accordingly, the gas is discharged from the radial cells 1b into the circumferential chamber 3 through the second communication holes 22d.

Instead of the tear seam 60, other means such as adhesives or seals with low adhesive strength may be used to close the communication holes 22d.

The system may be constituted such that, in the initial phase of inflation, the communication holes 22d have small openings or a gas passage is narrowed immediately before the communication holes 22d such that the gas is controlled to be discharged in small quantities of gas. In addition, when the radial chamber 1 is sufficiently inflated, it may be constituted so that the communication holes 22d have large openings or the gas passage is widened such that the gas is controlled to be discharged in large quantities of gas.

Also the airbags 10A to 10C shown in the other figures may be constituted so that the discharge of the gas from the communication holes 22d is controlled in the initial phase of inflation.

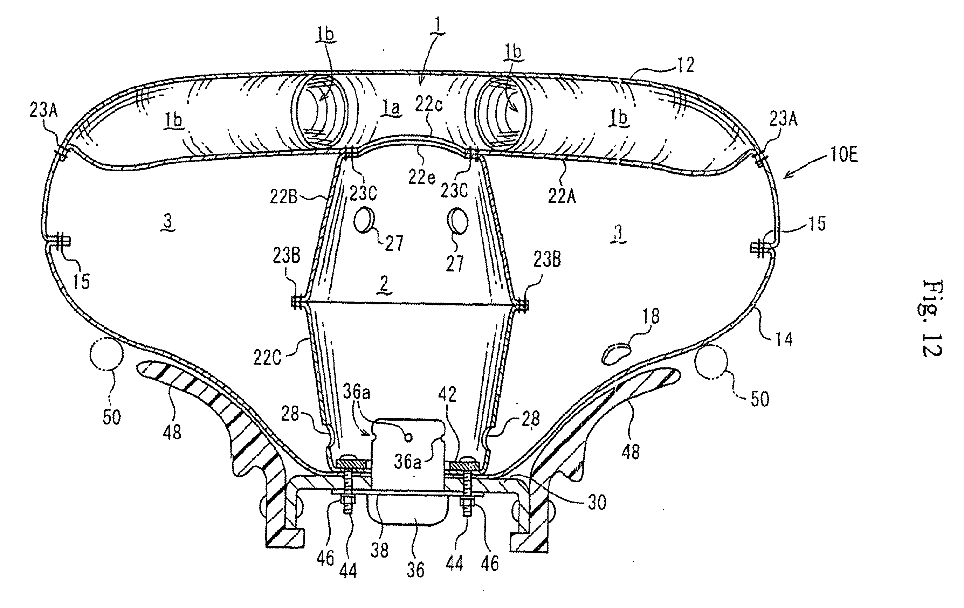

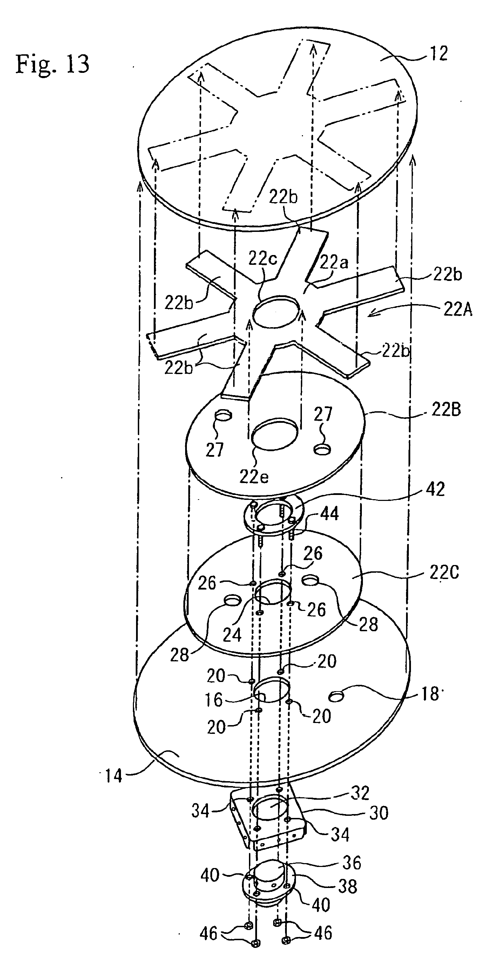

Fig. 12 is a cross-sectional view of an airbag and an airbag apparatus according to a fourth embodiment, and Fig. 13 is an exploded perspective view of the airbag and the airbag apparatus.

This embodiment provides an airbag 10E wherein the second communication holes 22d at the leading ends of the radial cells 1b are omitted in the airbag 10A shown in Figs. 5 and 6. In this embodiment, the gas is supplied from the central chamber 2 to the circumferential chamber 3 through the communication holes 27 and 28 of the second and third inner panels 22B and 22C.

Other constitution of the airbag 10E is the same as in the airbag 10A shown in Figs. 5 and 6.

In the airbag 10E, when the inflator 36 is actuated, in a similar way to the airbag 10A shown in Figs. 5 and 6, the central chamber 2 is first inflated, the gas is then introduced from the central chamber 2 into the radial chamber 1 through the first communication holes 22c and 22e, and the gas is introduced from the central chamber 2 into the circumferential chamber 3 through the communication holes 27 and 28, thus quickly inflating the whole airbag 10E.

In the airbag 10E, since the gas is not discharged from the radial cells 1b of the radial chamber 1 into the circumferential chamber 3, an internal pressure of the inflated radial chamber 1 remains high over a relatively long period of time.

It may also be constituted that the second communication holes 22d at the leading ends of the radial cells 1b are omitted in the airbag 10B shown in Figs. 7 and 8 and the airbag 10C shown in Figs. 9 and 10.

However, in the airbag 10C shown in Figs. 9 and 10, if the second communication holes 22d are omitted, a different mechanism for introducing the gas into the residual chamber 4 is provided. As this gas introducing mechanism, for example, it may be constituted that a chamber, such as the central chamber 2 in which the communication holes 27 and 28 are formed in the airbag 10A shown in Figs. 5 and 6, is interposed between the second inner panel 22E and the rear panel 14, and the gas is introduced from the chamber into the radial chamber 1B and the residual chamber 4, or gas introduction holes such as the communication holes 28 are formed around the inflator opening 22f of the second inner panel 22E, but not limited to this constitution.

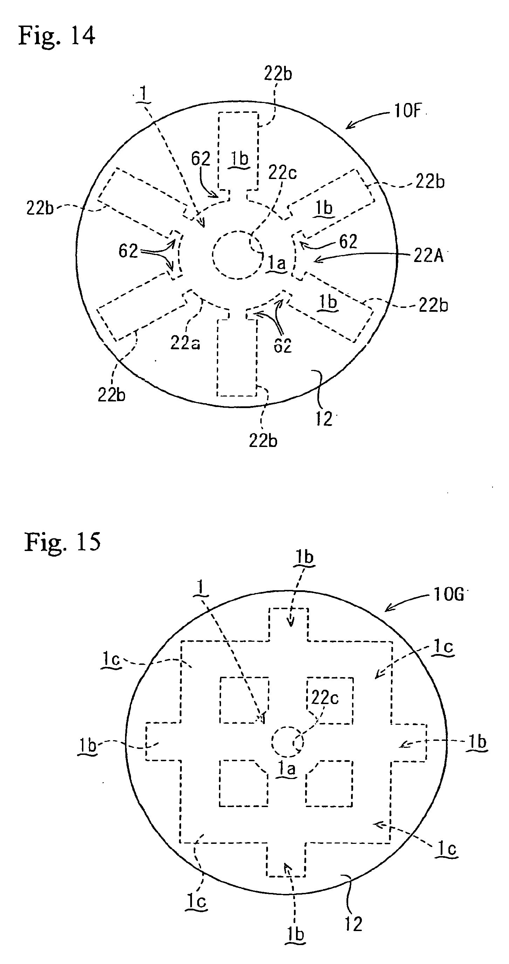

Fig. 14 is a plan view of an airbag according to a fifth embodiment.

This embodiment provides an airbag 10F wherein narrow width portions 62 are formed between the central cell 1a and the radial cells 1b in the airbag 10E shown in Figs. 12 and 13. In this embodiment, the gas is supplied from the central chamber 2 to the circumferential chamber 3 through the communication holes 27 and 28 of the second and third inner panels 22B and 22C (The inner panels 22B and 22C, the communication holes 27 and 28, the central chamber 2 and the circumferential chamber 3 are not shown in Fig. 14. See Figs. 12 and 13).

Other constitution of the airbag 10F is the same as in the airbag 10E shown in Figs. 12 and 13.

In addition, in the airbag 10F, since a backward flow of the gases, which are introduced from the central cell 1a into the radial cells 1b, into the central cell 1a is prevented by the narrow width portion 62, an internal pressure of the radial cells 1b remains high again over a long period of time after the radial cells 1b is inflated.

In addition, it may be constituted that the narrow width portion 62 is formed in some of the radial cells 1b and communication holes 22d are formed in the leading ends of the remaining radial cells 1b.

Instead of the narrow width portion 62, a check valve or the like may be formed to restrict the backward flow of the gas from the radial cells 1b into the central cell 1a.

Of course, in the airbags 10 and 10B to 10D shown in other figures, the narrow width portion 62 or the check valve or the like may also be formed in the radial cells 1b to prevent the backward flow of the gas.

In the invention, the radial chamber is not limited to the shapes shown in Figs. 1 to 14.

For example, in an airbag 10G shown in Fig. 15, a radial chamber 1C includes the central cell 1a disposed in the center of the airbag 10G, four radial cells 1b extending from the central cell 1a in four orthogonal airbag radial directions, and a square extending cell 1c extending to surround the central cell 1a with a square. Four sides of the square extending cell 1c extend across the middle portions of the radial cells 1b, respectively, in directions perpendicular to the extending directions of the radial cells 1b. The radial cells 1b are communicated with one another through the square extending cell 1c.

In the airbag 10G, since the radial cells 1b are communicated to one another through the square extending cell 1c, about the whole radial chamber 1C is inflated to nearly the same pressure. In addition, as the inflated square extending cell 1c is interposed between the radial cells 1b, the whole inflated radial chamber 1C becomes firm, thus allowing the airbag to protect the occupant more reliably.

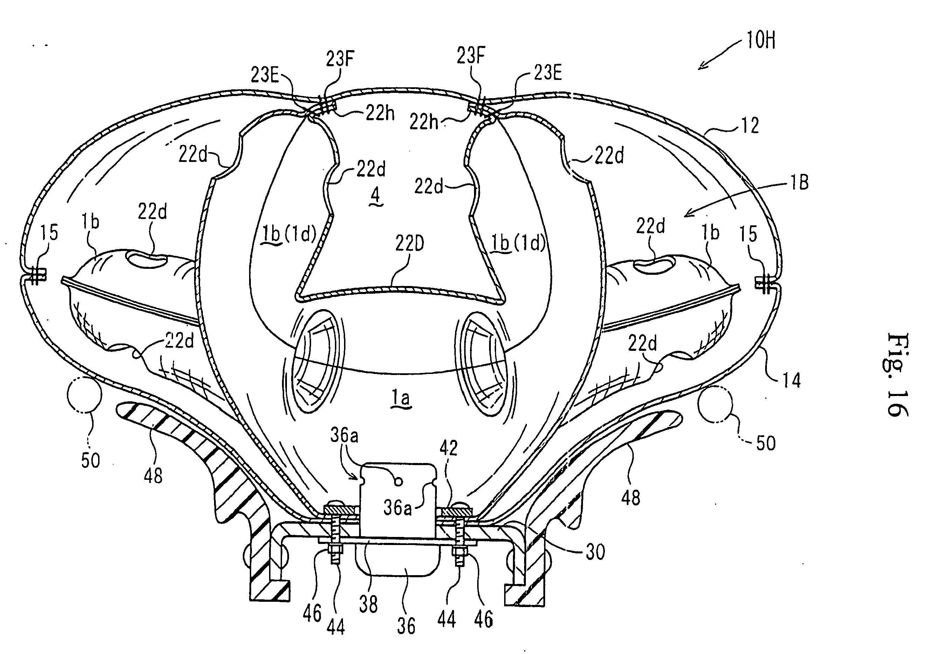

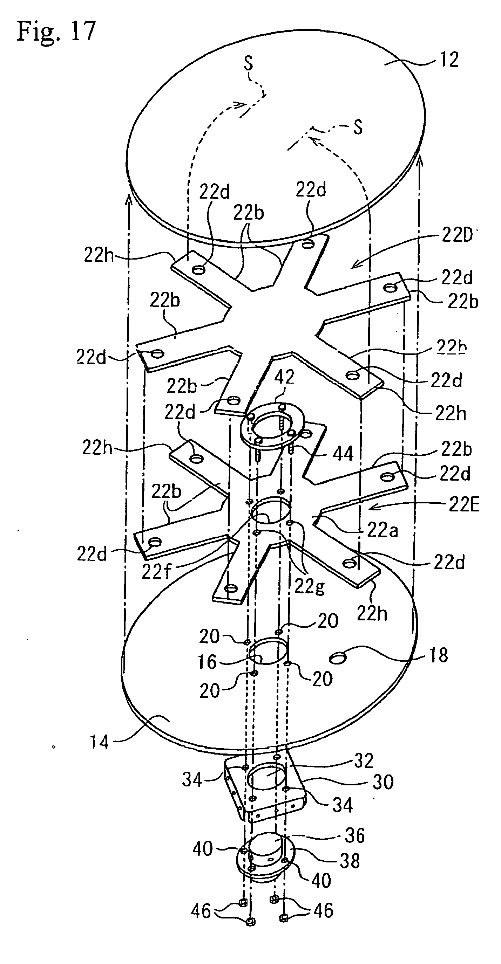

Fig. 16 is a cross-sectional view of an airbag and an airbag apparatus. Fig. 17 is an exploded perspective view of the airbag and the airbag apparatus of Fig. 17.

In an airbag 10H, some radial cells 1b of the radial chamber 1B of the airbag 10C according to Figs. 9 and 10 are bent on the occupant side, and referred to as occupant side protrusion cells 1d (indicated by 1b (1d) in Fig. 16). Each leading end of the occupant side protrusion cells 1d is connected to the vicinity of a central portion of the front panel 12.

To be more specific, among the six radial cells 1b of the radial chamber 1B, two radial cells 1b which extend in substantially opposite directions to each other are bent on the occupant side so as to form the occupant side protrusion cells 1d. The leading ends of the occupant side protrusion cells 1d are sewn with the front panel 12 at the vicinity of the central portion thereof by means of a seam 23F.

Sewn positions where the protrusion cells 1d are sewn to the front panel 12 by means of the seam 23F are indicated by a two-dot chain line S in Fig. 17. As shown in Fig. 17, the sewn positions S are spaced from each other with the center of the front panel 12 interposed therebetween. However, the sewn positions S where the protrusion cells 1d are sewn to the front panel 12 are not limited thereto. For example, both protrusion cells 1d may be sewn to the front panel 12 at substantially the same position of the central portion of the front panel 12.

By slightly extending the leading ends of the radial portions 22b of the first and second inner panels 22D and 22E which constitute the outer frame of these occupant side protrusion cells 1d, connection pieces 22h are protrudingly disposed so as to connect the protrusion cells 1d to the front panel 12. The connection pieces 22h are sewn to the front panel 12 by means of the seam 23F.

The connection pieces 22h are protrudingly disposed from both the radial portions 22b which constitute the outer frame of each occupant side protrusion cell 1d, and two connection pieces 22h and 22h overlap each other to be sewn to the front panel 12 by means of the seam 23F. However, the connection piece 22h may be exclusively formed from the radial portion 22b on one side. Otherwise, the connection piece 22h may be separately disposed so as to be mounted at the leading end of each occupant side protrusion cell 1d.

Other constitution of the airbag 10H is the same as that of the airbag 10C shown in Figs. 9 to 10. Further, the constitution of an airbag apparatus having the airbag 10H is also the same as the airbag apparatus having the airbag 10C. In Figs. 16 and 17, the same reference numerals as Figs. 9 to 10 denote the same parts.

The periphery of the inflator opening 22f of the second inner panel 22E overlaps the periphery of the inflator opening 16 of the rear panel 14 and the periphery of the inflator mount hole 32 of the retainer 30. In addition, the peripheries of the inflator openings 22f and 16 are fixed to the periphery of the inflator mount hole 32 by means of the fixation ring 42.

Accordingly, the inside of the airbag 10H is partitioned into the radial chamber 1B extending in the airbag radial direction and the residual chamber 4 surrounding the radial chamber 1B between the front panel 12 and the rear panel 14. In addition, the vicinity of the central portion of the front panel 12 is connected to the vicinity of the center of the rear panel 14 with the inner panels 22D and 22E, which constitute the radial chamber 1B interposed therebetween.

When the airbag 10H is inflated, since the front panel 12 is connected and fixed to the rear panel 14 by means of the inner panels 22D and 22D, the thickness of the airbag 10H when the airbag is inflated (the amount of the front panel 12 inflated toward the occupant) can be controlled.

In the airbag 10H, the inner panels 22D and 22E which constitute the radial chamber 1B also function as a controlling member which controls the thickness of the airbag 10H when the airbag is inflated. Therefore, it is not necessary to provide a separate member for controlling the thickness of the airbag 10H when the airbag is inflated. As a result, it is possible to simplify the sewing process of the airbag 10H and to achieve cost reduction.

Some radial cells 1b of the radial chamber 1B are bent on the occupant side and serve as the occupant side protrusion cells 1d, and the leading ends of the occupant side protrusion cells 1d are connected to the front panel 12. Therefore, by properly setting the length by which the occupant side protrusion cell 1d is extended from the central cell 1a, the thickness of the airbag 10H when the airbag is inflated (the amount of the front panel 12 inflated toward the occupant) can be controlled.

Further, among the six radial cells 1b of the radial chamber 1B, two radial cells are bent on the occupant side so as to be connected to the front panel 12 (that is, to form the occupant side protrusion cells 1d), but the remaining four radial cells 1b are free. Therefore, as the free radial cells 1b are inflated in the radial direction, the airbag 10H is expanded in the radial direction.

The number of the radial cells 1b (that is, the occupant side protrusion cells 1d) that are bent on the occupant side and connected to the front panel 12 is not specifically limited, and only one radial cell 1b or more than three radial cells 1b may be bent on the occupant side to be connected to the front panel 12. Of course, the number of the radial cells 1b is not limited to six, the number may be both less and more than six.

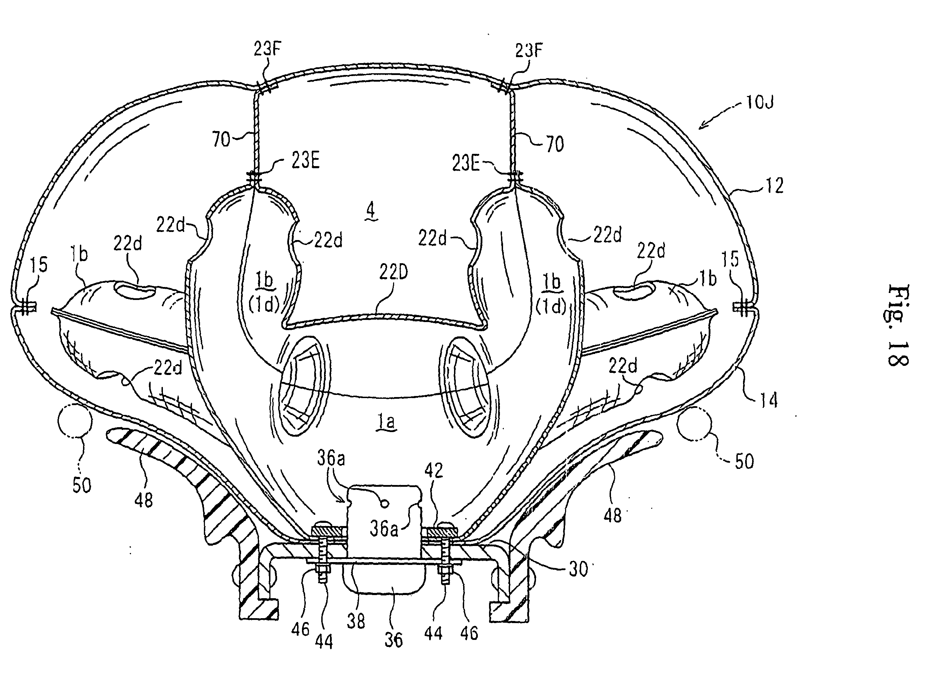

The leading end of each occupant side protrusion cell 1d is directly connected to the front panel 12. However, the leading end may be connected to the front panel 12 by means of a string, such as a tether. Fig. 18 is a cross-sectional view of an airbag and an airbag apparatus, which is configured as mentioned above.

In an airbag 10J according to Fig. 18, the leading end of each occupant side protrusion cell 1d of the airbag 10H according to Figs. 16 and 17 is connected to the vicinity of the central portion of the front panel 12 by means of tethers 70 serving as a string.

In this airbag, the tethers 70 are provided consecutively and integrally with the radial portions 22b of the first inner panel 22D which constitutes one half of the outer surface of the occupant side protrusion cell 1d, and extends by a predetermined length in an extension direction of the radial portion 22b from the leading end of the radial portion 22b. However, the tethers 70 may extend from the radial portion 22b of the second inner panel 22E which constitutes the other half of the outer surface, and the tethers 70 may extend from the radial portions 22b of both of the inner panels 22D and 22E, respectively, in which the two inner panels may overlap each other. Otherwise, the tethers 70 may be formed separately from these inner panels 22D and 22E, and connected to the leading end of the occupant side protrusion cell 1d by means of sewing or the like.

Leading ends of the tethers 70 which extend from each occupant side protrusion cell 1d are sewn to the front panel 12 by means of the seams 23F. A sewn position of each tether 70 is formed similar to the sewn position S where the occupant side protrusion cells 1d are sewn to the front panel 12 in the airbag 10H of Figs. 16 and 17.

Other constitution of the airbag 10J is the same as that of the airbag 10H shown in Figs. 16 and 17. In Fig. 18, the same reference numerals as Figs. 16 and 17 denote the same parts.

In the airbag 10J, by properly setting the length of the tether 70, the thickness of the airbag 10J when the airbag is inflated (the amount of the front panel 12 inflated toward the occupant) can be easily controlled.

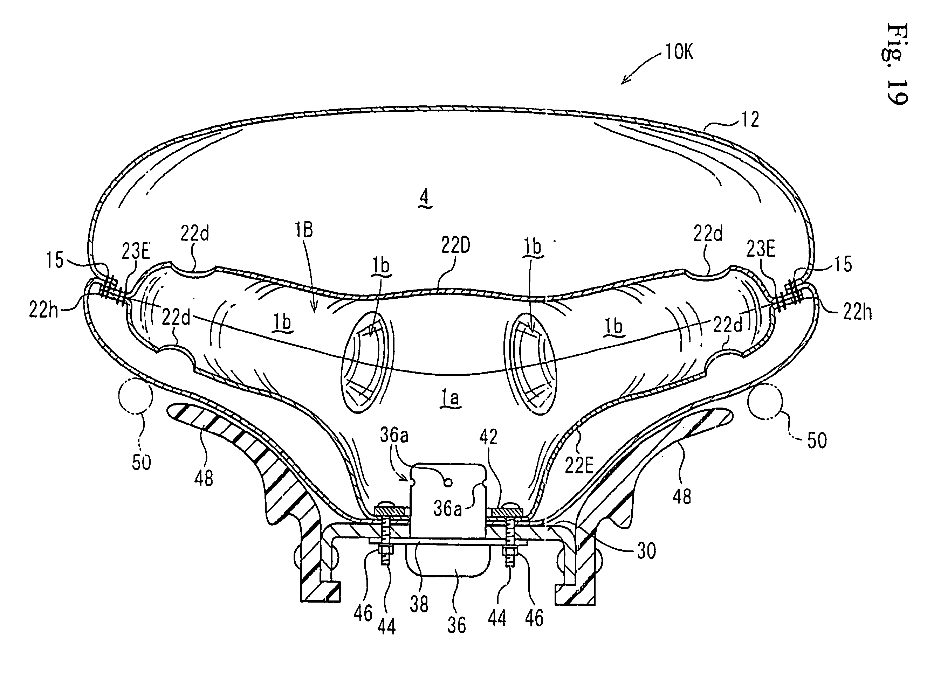

Fig. 19 is a cross-sectional view of an airbag and an airbag apparatus.

In an airbag 10K according to Fig. 19, the leading ends of the radial cells 1b of the radial chamber 1B of the airbag 10C according to Figs. 9 and 10 are connected to a lateral periphery (around the peripheral portion of the front panel 12 and the rear panel 14) of the airbag 10K in a peripheral direction at substantially equal intervals.

To be more specific, by slightly extending the leading ends of the radial portions 22b of the first and second inner panels 22D and 22E which constitute the outer frame of the radial cells 1d, the connection pieces 22h are protrudingly disposed so as to connect the radial cells 1d to a lateral portion of the airbag 10K. In this airbag, when the front panel 12 is sewn with the rear panel 14 at the peripheral portions of these panels, the front panel 12 and the rear panel 14 along with the connection piece 22h are sewn together by the seam 15.

However, the method for connecting (sewing) the connection pieces 22h to the lateral portion of the airbag is not limited thereto, the connection piece 22h of each radial portion 1b may be sewn to other positions than the sewn positions (the peripheral portions of the respective panels 12 and 14) where the front panel 12 is sewn with the rear panel 14 by the seam 15, for example, positions slightly closer to the center than the peripheral portions of the front panel 12 and the rear panel 14.

Other constitution of the airbag 10K is the same as that of the airbag 10C shown in Figs. 9 to 10. In Fig. 19, the same reference numerals as Figs. 9 to 10 denote the same parts.

When the airbag 10K is inflated, since the lateral periphery of the airbag 10K is connected and fixed to the central portion of the airbag by means of the radial cells 1b of the radial chamber 1B, the amount of the airbag 10K inflated in a lateral direction (radial direction), when the airbag is inflated, can be controlled.

In the airbag 10K, the inner panels 22D and 22E which constitute the radial chamber also function as a controlling member which controls the inflated amount of the airbag 10K in the lateral direction, when the airbag is inflated. Therefore, it is unnecessary to provide an exclusive member for controlling the inflated amount of the airbag 10K in the lateral direction. As a result, it is possible to simplify the process of sewing the airbag 10K and to achieve cost reduction.

In this airbag, the leading ends of the radial cells 1b of the radial chamber 1B are connected to the lateral periphery of the airbag 10K. Therefore, by properly setting the length by which the radial cell 1d is extended from the central cell 1a, the inflated amount of the airbag 10K in the lateral direction, when the airbag is inflated, can be controlled.

Further, in this airbag, even though, in the figure, the leading ends of the radial cells 1b are directly connected to the lateral periphery of the airbag 10K, the leading ends of the radial cells 1b may be connected to the lateral periphery of the airbag 10K by means of a string, such as a tether. With this structure, by properly setting the length of each string, the inflated amount of the airbag 10K in the lateral direction, when the airbag is inflated, can be easily controlled.

All the above-described embodiments illustrate examples of the invention, but the invention is not limited to the above embodiments.

## Claims

1. An airbag having an occupant facing surface (12) and a rear surface (14) opposite to the occupant facing surface, the airbag being inflatable by gas from an inflator (36),
wherein a radial chamber (1) extends in an airbag radial direction,
wherein the airbag is designed such that, when the airbag is inflated, at least some of the gas from the inflator (36) is introduced into the radial chamber (1), and
wherein said radial chamber (1) includes a central cell (la) into which gas is to be introduced from the inflator (36) in use of the airbag, and a plurality of radial cells (1b) extending from the central cell (la) in an airbag radial direction,
**characterized in that**
the radial chamber (1) is formed along the inner side of the occupant facing surface (12).

2. The airbag according to Claim 1,
wherein a first inner panel (22A) is disposed along the inner side of the occupant facing surface (12), and wherein the radial chamber (1) is formed between the first inner panel (22A) and the occupant facing surface (12).

3. The airbag according to claim 2,
wherein a second inner panel (22B) and a third inner panel (22C) are formed between the occupant facing surface (12) and the rear surface (14).

4. The airbag according to claim 3,
wherein an inside of the airbag (10; 10A; 10D; 10E; 10F; 10G) is partitioned into a central chamber (2) in the center of the airbag (10; 10A; 10D; 10E; 10F; 10G) and a circumferential chamber (3) surrounding the central chamber (2) by the second inner panel (22B) and the third inner panel (22C).

5. The airbag according to claim 4,
wherein a volume of the radial chamber (1) is smaller than a volume of the central chamber (2), and wherein a volume of the central chamber (2) is smaller than a volume of the circumferential chamber (3).

6. The airbag according to any one of Claims 1 to 5,
wherein the gas from the inflator (36) is introduced into a central portion of the radial chamber (1; 1A) and discharged from a leading end (22d) of the radial portion (22b) of the radial chamber (1; 1A) into the airbag so that the airbag is inflated.

7. An airbag apparatus having an airbag and an inflator for supplying gas to the airbag,
wherein the airbag is an airbag (10; 10A; 10D; 10E; 10F; 10G) according to any one of Claims 1 to 6.

## Patentansprüche

1. Airbag, welcher eine dem Insassen zugewandte Oberfläche (12) und eine hintere Oberfläche (14) gegenüberliegend zu der dem Insassen zugewandten Oberfläche aufweist, wobei der Airbag durch Gas von einem Gasgenerator (36) aufblasbar ist,
wobei sich eine radiale Kammer (1) in einer radialen Richtung des Airbags erstreckt,
wobei der Airbag so ausgestaltet ist, dass, wenn der Airbag aufgeblasen wird, zumindest ein Teil des Gases von dem Gasgenerator (36) in die radiale Kammer (1) eingeführt wird, und
wobei die radiale Kammer (1) eine zentrale Zelle (1a), in welche Gas von dem Gasgenerator (36) bei Verwendung des Airbags einzuführen ist, und eine Mehrzahl von radialen Zellen (1b), welche sich von der zentralen Zelle (1a) in eine radiale Richtung des Airbags erstrecken, aufweist,
**dadurch gekennzeichnet,**
**dass** die radiale Kammer (1) entlang der Innenseite der dem Insassen zugewandten Oberfläche (12) ausgebildet ist.

2. Airbag nach Anspruch 1,
wobei eine erste Innenlage (22A) entlang der Innenseite der dem Insassen zugewandten Oberfläche (12) angeordnet ist, und wobei die radiale Kammer (1) zwischen der ersten Innenlage (22A) und der dem Insassen zugewandten Oberfläche (12) ausgebildet ist.

3. Airbag nach Anspruch 2,
wobei eine zweite Innenlage (22B) und eine dritte Innenlage (22C) zwischen der dem Insassen zugewandten Oberfläche (12) und der hinteren Oberfläche (14) ausgebildet sind.

4. Airbag nach Anspruch 3,
wobei ein Inneres des Airbags (10; 10A; 10D; 10E; 10F; 10G) durch die zweite Innenlage (22B) und die dritte Innenlage (22C) in eine zentrale Kammer (2) in der Mitte des Airbags (10; 10A; 10D 10E; 10F; 10G) und eine Umfangskammer (3), welche die zentrale Kammer (2) umgibt, unterteilt ist.

5. Airbag nach Anspruch 4,
wobei ein Volumen der radialen Kammer (1) kleiner als ein Volumen der zentralen Kammer (2) ist, und wobei ein Volumen der zentralen Kammer (2) kleiner als ein Volumen der Umfangskammer (3) ist.

6. Airbag nach einem der Ansprüche 1-5,
wobei das Gas von dem Gasgenerator (36) in einen zentralen Abschnitt der radialen Kammer (1; 1A) eingeführt wird und von einem vorderen Ende (22d) des radialen Abschnitts (22b) der radialen Kammer (1; 1A) so in den Airbag abgeführt wird, dass der Airbag aufgeblasen wird.

7. Airbagvorrichtung, welche einen Airbag und einen Gasgenerator, welcher den Airbag mit Gas versorgt, aufweist,
wobei der Airbag ein Airbag (10; 10A; 10D; 10E; 10F; 10G) gemäß einem der Ansprüche 1 bis 6 ist.

## Revendications

1. Sac de sécurité gonflable, présentant une surface faisant face au passager (12) et une surface arrière (14), opposée à la surface faisant face au passager, le sac de sécurité gonflable étant gonflable par du gaz provenant d'un gonfleur (36),
dans lequel une chambre radiale (1) s'étend dans une direction radiale de sac de sécurité gonflable,
dans lequel le sac de sécurité gonflable est conçu de manière que, lorsque le sac de sécurité gonflable est gonflé, au moins une certaine quantité du gaz provenant du gonfleur (36) est introduite dans la chambre radiale (1), et
dans lequel ladite chambre radiale (1) comprend une cellule centrale (1a), dans laquelle du gaz doit être introduit à partir du gonfleur (36), lorsque le sac de sécurité gonflable est en utilisation, et une pluralité de cellules radiales (1b), s'étendant à partir de la cellule centrale (1a) dans une direction radiale de sac de sécurité gonflable,
**caractérisé en ce que**
la chambre radiale (1) est formée le long du côté intérieur de la surface tournée vers le passager (12).

2. Sac de sécurité gonflable selon la revendication 1,
dans lequel un premier panneau intérieur (22A) est disposé le long du côté intérieur de la surface tournée vers le passager (12), et dans lequel la chambre radiale (1) est formée entre le premier panneau intérieur (22A) et la surface faisant face au passager (12).

3. Sac de sécurité gonflable selon la revendication 2,
dans lequel un deuxième panneau intérieur (22B) et un troisième panneau intérieur (22C) sont formés entre la surface faisant face au passager (12) et la surface arrière (14).

4. Sac de sécurité gonflable selon la revendication 3,
dans lequel une partie intérieure du sac de sécurité gonflable (10 ; 10A ; 10D ; 10E ; 10F ; 10G) est subdivisée en une chambre centrale (2), au centre du sac de sécurité gonflable (10; 10A; 10D; 10E; 10F; 10G), et une chambre circonférentielle (3), entourant la chambre centrale (2), par le deuxième panneau intérieur (22B) et le troisième panneau intérieur (22C).

5. Sac de sécurité gonflable selon la revendication 4,
dans lequel un volume de la chambre radiale (1) est plus petit qu'un volume de la chambre centrale (2), et dans lequel un volume de la chambre centrale (2) est plus petit qu'un volume de la chambre circonférentielle (3).

6. Sac de sécurité gonflable selon l'une quelconque des revendications 1 à 5,
dans lequel le gaz provenant du gonfleur (36) est introduit dans une partie centrale de la chambre radiale (1 ; 1A) et déchargé à partir d'une extrémité avant (22d) de la partie radiale (22b) de la chambre radiale (1 ; 1A), dans le sac de sécurité gonflable, de manière que le sac de sécurité gonflable soit gonflé.

7. Dispositif de sac de sécurité gonflable comprenant un sac de sécurité gonflable et un gonfleur, pour fournir du gaz au sac de sécurité gonflable,
dans lequel le sac de sécurité gonflable est un sac de sécurité gonflable (10 ; 10A ; 10D ; 10E ; 10F ; 10G) selon l'une quelconque des revendications 1 à 6.
